# EUROPÄISCHE PATENTSCHRIFT

(11) **EP 2 835 699 B1**
(45) Veröffentlichungstag und Bekanntmachung des Hinweises auf die Patenterteilung: **06.05.2015**
(21) Anmeldenummer: 13179809.2
(22) Anmeldetag: 09.08.2013
(51) Int. Cl.: G05B 9/02, G05B 19/042

(54) **Vorrichtung und Verfahren zum Konfigurieren und/oder Programmieren einer Sicherheitssteuerung**
Method and device for configuring and/or programming a safety controller
Dispositif et procédé de configuration et/ou de programmation d'un contrôleur de sécurité

(43) Veröffentlichungstag der Anmeldung: 11.02.2015
(73) Patentinhaber: SICK AG, 79183 Waldkirch (DE)
(72) Erfinder: Saumer, Markus, 77948 Friesenheim (DE); Weddingfeld, Klaus, 79183 Waldkirch (DE)
(74) Vertreter: Ludewigt, Christoph

(56) Entgegenhaltungen:
- EP-A1- 1 589 386
- EP-A1- 2 098 924
- EP-A1- 2 098 925
- EP-A1- 2 244 143
- DE-A1-102010 022 066

## Beschreibung

Die vorliegende Erfindung betrifft eine Vorrichtung zum Konfigurieren und/oder Programmieren einer Sicherheitssteuerung und ein Verfahren zum Konfigurieren und/oder Programmieren derselben gemäß den jeweiligen Oberbegriffen der Ansprüche 1 und 7.

In der heutigen Automatisierung von Bearbeitungszentren, insbesondere Industrieanlagen, wird die Anforderung an eine sichere Überwachung und eine sichere Reaktion bei einer Gefahrensituation stetig höher, um das Personal an den Bearbeitungszentren zu schützen und eine hohe Betriebssicherheit zu gewährleisten.

Hierzu dienen Sicherheitssteuerungen, die die Bearbeitungszentren überwachen und bei Anliegen eines Gefahrensignals fehlerfrei auf eine vorgegebene Art reagieren. Eine derartige bekannte Anwendung ist die Absicherung von gefährlichen Arbeitsmaschinen, wie z.B. Automationszellen, insbesondere Roboterarbeitszellen, Pressen oder dergleichen, die sofort abgeschaltet oder in einen sicheren Zustand gebracht werden, wenn Bedienpersonal sich in unerlaubter Weise den Arbeitsmaschinen nähert oder sich in deren Bewegungsbereichen befindet. Zur Erkennung der Gefahrensituation erhält die Sicherheitssteuerung Signale von zugehörigen Sensoren, wie z.B. eine Lichtschranke, ein Lichtgitter, eine Kamera oder dergleichen, die von der Sicherheitssteuerung ausgewertet werden und eine entsprechende Sicherheitsreaktion durch die Sicherheitssteuerung ausgelöst wird. Durch die Veränderbarkeit der Bearbeitungszentren durch Erweiterung mit zusätzlichen Automationszellen oder Ersetzen der Automationszellen mit anderen verschiedenartigen Automationszellen wird eine ebenfalls hohe Flexibilität betreffend der Erweiterbarkeit an eine Sicherheitssteuerung erwartet, die entsprechend den veränderten Bearbeitungszentren neu konfiguriert und programmiert werden muss.

Erfindungsgemäß wird unter Konfigurieren die Auswahl von Elementen, die zu der Sicherheitssteuerung gehören, wie z.B. Steuerungs-, Eingangs- und/oder Ausgangsmodulen, Sensoren, Aktoren oder dergleichen sowie deren physische Anordnung und Verbindung bzw. Verdrahtung verstanden. Unter Programmieren wird das auf Basis von Benutzerangaben automatische Erzeugen und Zusammenfügen von der Konfiguration entsprechenden Programmteilen unter Einbeziehung logischer Auswertungsregeln verstanden, welche die bei der Konfiguration ausgewählten Elemente miteinander verbinden, um Eingangssignale der Sensoren zu Ansteuerungen der Aktoren mittels definierten Sicherheitsreaktionen zu erstellen. Im Folgenden wird meist vereinfachend der Begriff Konfigurieren verwendet, welcher situationsabhängig eine Programmierung einschließen soll.

Bei einer Konfiguration und/oder Programmierung einer Sicherheitssteuerung ist es besonders wichtig, dass sie fehlerfrei ist, da sonst das Bearbeitungszentrum nicht als sicher zertifiziert wird und damit nicht oder nur eingeschränkt eingesetzt werden kann.

Aus der EP 2 098 924 A1 ist eine Vorrichtung bzw. ein Verfahren gemäß den jeweiligen Oberbegriffen der Ansprüche 1 und 7 bekannt.

EP 2 098 925 A1 offenbart eine Vorrichtung und ein Verfahren zum Programmieren und/oder Konfigurieren einer Sicherheitssteuerung, bei der bzw. bei dem erzeugte Elemente samt ihre Parameter in einer Bibliothek hinterlegt und dem Bediener zur Verfügung gestellt werden, so dass eine flexible Erstellung der Sicherheitssteuerung ermöglicht ist.

EP 2 244 143 A1 betrifft ein Verfahren und eine Vorrichtung zum Programmieren eines Industriereglers einer automatisierten Anlage, wobei eine Steuerung Sensordaten während einer Ausführung eines Maschinen-Steuerprogramms mit einem übergelagerten sicheren Steuerprogramm einbindet.

Es ist daher Aufgabe der vorliegenden Erfindung, eine Vorrichtung und ein Verfahren zum Konfigurieren und/oder Programmieren einer Sicherheitssteuerung der eingangsgenannten Art derart zu verbessern, dass eine fehlerfreie Sicherheitssteuerung einfacher erstellt werden kann.

Die Aufgabe wird erfindungsgemäß durch eine Vorrichtung zum Konfigurieren und/oder Programmieren einer Sicherheitssteuerung gemäß Anspruch 1 und durch ein Verfahren gemäß Anspruch 7 gelöst.

Erfindungsgemäß ist die Vorrichtung zum Konfigurieren und/oder Programmieren einer Sicherheitssteuerung mit
- einem Display zum Anzeigen eines Programmteils der Sicherheitssteuerung in Form eines Blockschaltbilds, wobei einzelne Blöcke Programmelemente darstellen,
- einer Speichereinheit (102) mit zumindest einem Bearbeitungselement (BE), insbesondere einer Logikverknüpfung und/oder einer Funktion, und mit Kommunikationselementen (KE), die insbesondere als Eingangs- und Ausgangssignale ausgebildet sind, und
- einer Rechnereinheit (103) zum Auswählen der Bearbeitungs- und Kommunikationselemente (BE, KE) in der Speichereinheit (102) und zum Erzeugen einer Verknüpfung der ausgewählten Bearbeitungs- und Kommunikationselemente (BE, KE) in dem im Display (101) angezeigten Blockschaltbild (B), wobei die Rechnereinheit (103) ausgelegt ist, ein die Sicherheitssteuerung (10) steuerndes Programm aus dem Blockschaltbild (B) zu erzeugen,
wobei die Kommunikationselemente (KE) sowohl sicherheitsbezogen als auch nicht-sicherheitsbezogen gekennzeichnet sind, und
wobei die Rechnereinheit (103) ferner ausgelegt ist, dass bei einer Verknüpfung eines sicherheitsbezogen gekennzeichneten Kommunikationselements (KE) mit einem nicht-sicherheitsbezogen gekennzeichneten Kommunikationselement (KE), die an einer Eingangsseite des Bearbeitungselements (BE) anliegen, stets ein als nicht-sicherheitsbezogen gekennzeichnetes Kommunikationselement (KE) sich auf einer Ausgangsseite des Bearbeitungselements (BE) ergibt.

Vorteilhafterweise besteht das Bearbeitungselement aus sicherheitsbezogene und nicht- sicherheitsbezogene Funktionen und/oder einer UND- oder ODER-Logikverknüpfung. Vorteilhafterweise enthält das Kommunikationselement sicherheitsbezogene und nicht-sicherheitsbezogene Eingangs- und Ausgangssignale oder sicherheitsbezogene und nicht-sicherheitsbezogene Daten, insbesondere Datenprotokolle. Dadurch ist es möglich, eine Sicherheitssteuerung sehr flexibel zu konfigurieren und zu programmieren.

Vorzugsweise ist die Rechnereinheit ausgelegt, das als nicht-sicherheitsbezogen gekennzeichnete Kommunikationselement editierbar zu machen und eine Änderung des als nicht-sicherheitsbezogen gekennzeichneten Kommunikationselements in ein sicherheitsbezogen gekennzeichnetes Kommunikationselement zuzulassen. Vorteilhafterweise ist die Rechnereinheit ausgelegt, die Änderung des als nicht-sicherheitsbezogen gekennzeichneten Kommunikationselements in ein sicherheitsbezogen gekennzeichnetes Kommunikationselement nur bei einer Bestätigung der Änderung mit Angabe von Gründen zuzulassen. Hierdurch kann eine manuelle Manipulation des als nicht-sicherheitsbezogen gekennzeichneten Kommunikationselements sicherer überwacht und dokumentiert werden, so dass eine Nachverfolgung der Erstellung der Sicherheitssteuerung gewährleistet ist.

Vorteilhafterweise weist die Rechnereinheit ein Diagnosemittel auf, das eine Position des Bearbeitungselements angibt, an dem erstmals eingangsseitig ein sicherheitsbezogen gekennzeichnetes Kommunikationselement und ein nicht-sicherheitsbezogen gekennzeichnetes Kommunikationselement anliegen, so dass bei einer Verknüpfung von mehreren Bearbeitungs- und Kommunikationselementen das als nicht-sicherheitsbezogen gekennzeichnete Kommunikationselement sich als Ergebnis ergibt. Durch das Diagnosemittel kann bei einer umfangreichen, komplexen Sicherheitssteuerung eines großen Bearbeitungszentrums, die viele unterschiedliche miteinander verschaltete Module aufweist, auf einfacher Weise das Element der Sicherheitssteuerung identifiziert werden, an dem zum ersten Mal ein sicherheitsbezogen gekennzeichnetes Kommunikationselement mit einem nicht-sicherheitsbezogen gekennzeichneten Kommunikationselement verbunden wurde, so dass sich ein nicht-sicherheitsbezogen gekennzeichnetes Kommunikationselement ergibt, und gegebenenfalls die manuelle Änderung des Status des Kommunikationselements von nicht-sicherheitsbezogen in sicherheitsbezogen überprüft wird. Hierbei kann das Diagnosemittel ein Programmelement der Sicherheitssteuerung oder ein Softwaretool für die Sicherheitssteuerung sein.

Die obige Aufgabe wird weiterhin erfindungsgemäß durch ein Verfahren zum Konfigurieren und/oder Programmieren einer Sicherheitssteuerung gelöst, das zumindest ein Bearbeitungselement, insbesondere eine Logikverknüpfung und/oder eine Funktion, und Kommunikationselemente in einer Speichereinheit bereitstellt, die Bearbeitungs- und Kommunikationselemente aus der Speichereinheit auswählt, eine Verknüpfung der ausgewählten Bearbeitungs- und Kommunikationselemente mittels vorgegebenen Verknüpfungsregeln erzeugt, wobei die Kommunikationselemente (KE) als sicherheitsbezogen und nicht-sicherheitsbezogen gekennzeichnet werden, und ein Ergebnis der Verknüpfung auf einer Ausgangsseite des Bearbeitungselements stets als ein nicht-sicherheitsbezogen gekennzeichnetes Kommunikationselement gesetzt wird, wenn bei der Verknüpfung ein sicherheitsbezogen gekennzeichnetes Kommunikationselement und ein nicht-sicherheitsbezogen gekennzeichnetes Kommunikationselement auf einer Eingangsseite des Bearbeitungselements ausgewählt werden.

Vorteilhafterweise werden sicherheitsbezogene und nicht- sicherheitsbezogene Funktionen und/oder eine Logikverknüpfung, insbesondere UND- oder ODER-Logikverknüpfung, als Bearbeitungselement zur Auswahl bereitgestellt.

Weiterhin werden vorteilhafterweise sicherheitsbezogene und nicht-sicherheitsbezogene Eingangs- und Ausgangssignale oder sicherheitsbezogene und nicht-sicherheitsbezogene Daten, insbesondere Datenprotokolle als Kommunikationselement zur Auswahl bereitgestellt.

Vorteilhafterweise wird das nicht-sicherheitsbezogen gekennzeichnete Kommunikationselement editiert, das sich als Ergebnis der Verknüpfung zwischen einem sicherheitsbezogenen Kommunikationselement und einem nicht-sicherheitsbezogenen Kommunikationselement ergeben hat, und in ein sicherheitsbezogen gekennzeichnetes Kommunikationselement geändert. Hierbei wird vorteilhafterweise die Änderung des als nicht-sicherheitsbezogen gekennzeichneten Kommunikationselements in ein sicherheitsbezogenen gekennzeichnetes Kommunikationselement mit Angabe eines Grundes für die Änderung erst dann durchgeführt, wenn die Änderung bestätigt und die Änderungsbegründung dokumentiert ist. Dadurch ist die Änderung des Status des nicht-sicherheitsbezogen gekennzeichneten Kommunikationselements sicher überprüfbar und durch die Dokumentation der Begründung einfach nachvollziehbar.

Vorteilhafterweise wird bei einer Reihe von mehreren Verknüpfungen, bei der das als nicht-sicherheitsbezogen gekennzeichnete Kommunikationselement sich ergeben hat, die Position des Bearbeitungselements angezeigt, bei dem erstmals eingangsseitig ein sicherheitsbezogenes Kommunikationselement mit einem nicht-sicherheitsbezogenen Kommunikationselement verknüpft ist. Dadurch ist eine Identifizierung des Bearbeitungselements, bei dem ein möglicher Fehler erstmals auftreten konnte, leicht herauszufinden, so dass eine Fehlerdiagnose einfach durchzuführen ist.

Im Nachfolgenden werden vorteilhafte Ausgestaltungen der Erfindung anhand von Zeichnungen näher erläutert. Hierzu zeigt, teilweise schematisiert:
Fig. 1: eine Darstellung einer modularen Sicherheitssteuerung eines Bearbeitungszentrums mit angeschlossenen Sensoren und Aktoren, die erfindungsgemäß konfiguriert und/oder programmiert werden kann;
Fig. 2: eine Darstellung einer erfindungsgemäßen Vorrichtung zum Konfigurieren und/oder Programmieren der modularen Sicherheitssteuerung;
Fig. 3: eine rein beispielhafte logische Verknüpfung der Sensoren und Aktoren für die Erstellung des Programms der Sicherheitssteuerung;
Fig. 4a: eine Darstellung einer erfindungsgemäßen Diagnose einer Verknüpfungskette von Sensoren und Aktoren mittels Bearbeitungs- und Kommunikationselementen;
Fig. 4b: eine erfindungsgemäße Diagnose und Änderung des Status der Verknüpfungskette der Fig. 4a.

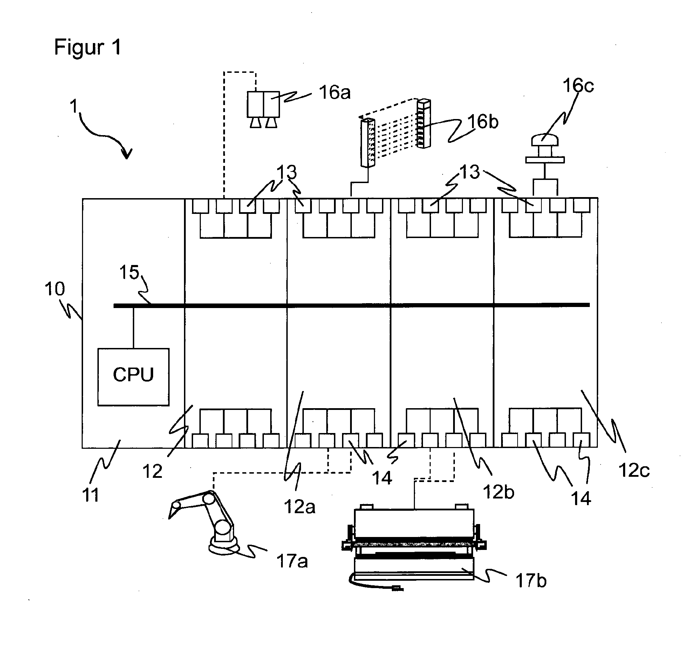

Die Figur 1 zeigt schematisch ein Bearbeitungszentrum (1), das eine Sicherheitssteuerung (10), Sensoren und Aktoren aufweist. Beispielhaft sind drei Sensoren, die insbesondere eine Kamera (16a), ein Lichtgitter (16b), ein Not-Aus-Schalter (16c) oder dergleichen sein können, an jeweiligen Anschlussmodulen (12, 12a, 12b, 12c) über Eingangsanschlüsse (13) angeschlossen. Zwei Aktoren, in Form eines Roboterarms (17a) und einer Stanze (17b), sind ausgangsseitig an den Anschlussmodulen (12, 12a, 12b, 12c) mittels jeweiligen zugeordneten Ausgangsanschlüssen (14) ebenfalls an die Sicherheitssteuerung (10) angeschlossen. Die Anschlussmodule (12, 12a, 12b, 12c) sind somit Bestandteile der Sicherheitssteuerung (10) und können in ihrer Anzahl und ihrer Art, insbesondere sicherheitsbezogen oder nicht-sicherheitsbezogen, variieren.

Die Anschlussmodule (12, 12a, 12b, 12c) weisen vorzugsweise eigene Rechnereinheiten (CPU), programmierbare Logik, insbesondere UND- oder ODER-Logikverknüpfung (106, 107), oder ähnliche digitale Bausteine auf, zur Eingangsauswertung der Signale der Sensoren. Die Sensoren übermitteln ihre erfassten Zustände an die Anschlussmodule (12, 12a, 12b, 12c), wo die Signale der Sensoren vorverarbeitet werden (Plausibilitätsprüfungen etc.). Die Ausgangssignale der Vorverarbeitung werden für die eigentliche Programmierung der Sicherheitssteuerung (10) bereitgestellt. Die Rechnereinheiten der Anschlussmodule kommunizieren vorteilhafterweise über eine serielle Kommunikations-verbindung (15) miteinander und sind mit einem Steuerungsmodul (11) verbunden, das die Funktion eines Masters hat. Hierbei kann die Kommunikationsverbindung (15) insbesondere aus einem Datenbus bestehen, der auf einem seriellen Standard, einem Feldbusstandard, wie IO-Link, Profinet, EtherCat, oder CAN, oder auch einem proprietären Standard basieren.

Die Steuerung (10) überwacht das Bearbeitungszentrum (1), insbesondere eine Roboterzelle des Roboterarms (17a) und die Stanze (17b), und führt anhand von den erfassten Zuständen, insbesondere Gefahrensituationen, des Bearbeitungszentrums (1) entsprechende Sicherheitsreaktionen aus. Hierbei weist das Steuerungsmodul (11) eine gegebenenfalls redundant ausgelegte Rechnereinheit (CPU) in Form eines Mikroprozessors oder dergleichen auf, auf der das eigentliche Programm zur Steuerung abläuft.

Dazu sind auf der Rechnereinheit (CPU) des Steuerungsmoduls (11) Bearbeitungselemente (BE) vorgesehen, die insbesondere aus sicherheitsbezogene und nicht-sicherheitsbezogene Funktionen (S-F) und/oder Logikverknüpfungen, insbesondere UND- oder ODER-Logikverknüpfungen, bestehen.

Des Weiteren sind sogenannte Kommunikationselemente (KE) vorgesehen, worunter in dieser Erfindung sicherheitsbezogene oder nicht-sicherheitsbezogene Eingangssignale und Ausgangssignale (S-IO, NS-IO) oder sicherheitsbezogene und nicht-sicherheitsbezogene Daten, insbesondere Datenprotokolle, verstanden werden.

Die Bearbeitungselemente (BE) verarbeiten die Kommunikationselemente (KE) und übermitteln entsprechende Kommunikationselemente (KE) an die Aktoren. Hierbei kann es sich insbesondere um eine sicherheitsgerichtete Abschaltung oder ein Führen der Aktoren in einem sicheren Zustand handeln.

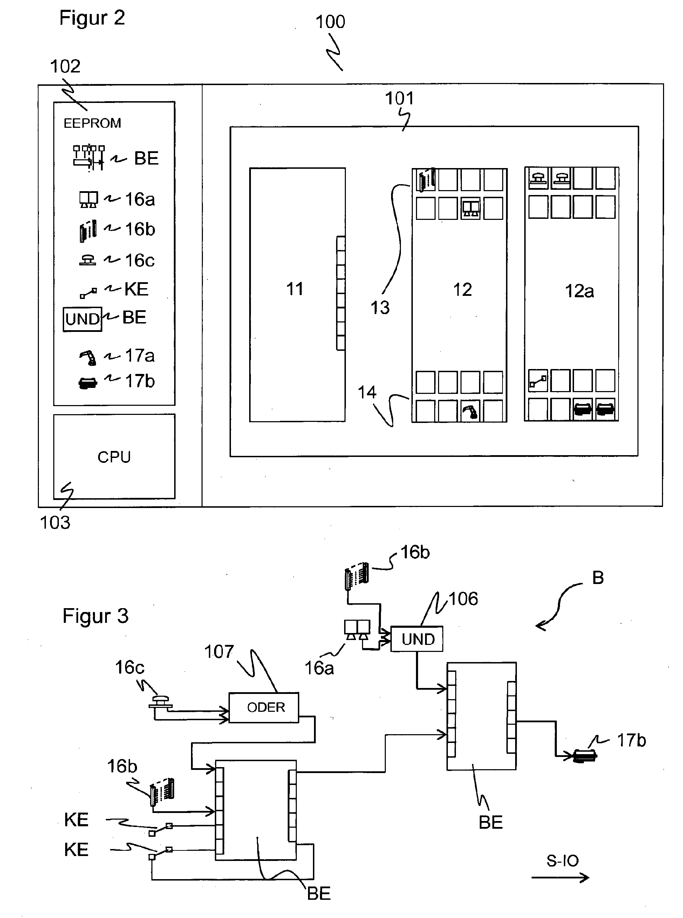

Zum Konfigurieren und Programmieren der Sicherheitssteuerung (10) ist in den Figuren 2 bis 4b eine erfindungsgemäße Vorrichtung (100) zum Konfigurieren und/oder Programmieren der Sicherheitssteuerung (10) gezeigt.

Die Vorrichtung (100) weist ein Display (101) auf, auf dem ein Programmteil der Sicherheitssteuerung (10) in Form eines Blockschaltbilds (B) angezeigt ist, wobei einzelne Blöcke Programmelemente darstellen. Beispielhaft sind ein Steuerungsmodul (11) und zwei Anschlussmodule (12, 12a) mit ihren jeweiligen Eingangs- und Ausgangsanschlüssen (13, 14) dargestellt, wobei die Eingangs- und Ausgangsanschlüsse (13, 14) mit den jeweiligen Sensoren bzw. Aktoren an den vorgegebenen Stellen belegt sind.

Eine Speichereinheit (102), vorteilhafterweise als nicht-flüchtiger EEPROM-Speicher ausgebildet, ist vorgesehen, die zumindest einem Bearbeitungselement (BE) und sowohl sicherheitsbezogene als auch nicht-sicherheitsbezogene Kommunikationselemente (KE) aufweist.

Ferner ist eine Rechnereinheit (103) in Form eines Mikroprozessors (CPU) oder dergleichen vorgesehen, mit der die Bearbeitungs- und Kommunikationselemente (BE, KE) in der Speichereinheit (102) ausgewählt werden können. Die Rechnereinheit (103) erzeugt aus den ausgewählten Bearbeitungs- und Kommunikationselementen (BE, KE) in dem im Display (101) angezeigten Blockschaltbild (B) eine Verknüpfung. Hierbei erstellt die Rechnereinheit (103) bei einer Verknüpfung eines sicherheitsbezogenen Kommunikationselements (KE) mit einem nicht-sicherheitsbezogenen Kommunikationselement (KE), die an der Eingangsseite des Bearbeitungselements (BE) anliegen, stets ein als nicht-sicherheitsbezogen gekennzeichnetes Kommunikationselement (KE) auf der Ausgangsseite des Bearbeitungselements (BE).

Aus dem konfigurierten Blockschaltbild (B) erzeugt die Rechnereinheit (103) ein Programm mit den logischen Verknüpfungen bzw. Verschaltungen der Elemente und entsprechenden Sicherheitsreaktionen, das der Sicherheitssteuerung (10) zum Steuern des Bearbeitungszentrums (1) dient.

Somit ist sichergestellt, dass bei einer gemeinsamen Verwendung von sicherheitsbezogenen und nicht-sicherheitsbezogenen Bearbeitungs- bzw. Kommunikationselementen (BE, KE) keine Beeinträchtigung der Sicherheitsfunktion der Sicherheitssteuerung (10) auftritt.

Erfindungsgemäß ist es vorteilhaft, die sicherheitsbezogenen und nicht-sicherheitsbezogenen Bearbeitungs- und Kommunikationselemente (BE, KE) mit unterschiedlichen Farben darzustellen. Hierbei werden insbesondere sicherheitsbezogene Bearbeitungs- und Kommunikationselemente (BE, KE) mit gelb (in den Figuren als durchgezogene Linie dargestellt) und nicht-sicherheitsbezogene Bearbeitungs- und Kommunikationselemente (BE, KE) mit grau (in den Figuren als gestrichelte Linie dargestellt) gekennzeichnet.

Gemäß der Erfindung wird das Ergebnis einer Verknüpfung aus einem gelben, sicherheitsbezogenen Kommunikationselement (KE) mit einem grauen, nicht-sicherheitsbezogenen Kommunikationselement (KE) stets ein graues, als nicht-sicherheitsbezogen gekennzeichnetes Kommunikationselement (KE), so dass es ein leichtes ist, die Beeinträchtigung der Sicherheitsfunktion der Sicherheitssteuerung (10) zu erkennen.

In Figur 3 ist eine beispielhafte Verknüpfung eines erfindungsgemäß konfigurierten Blockschaltbilds (B) mit logischen Bausteinen gezeigt. Hierbei sind zwei sicherheitsbezogene Signale (S-IO) eines Not-Aus-Schalters (16c) mit einer ODER-Logikverknüpfung (107) verbunden. Aus den sicherheitsbezogenen Eingangssignalen (S-IO) wird ein sicherheitsbezogenes Ausgangssignal (S-IO) für das folgende erste Bearbeitungselement (BE) erzeugt. In das erste Bearbeitungselement (BE) gehen eingangsseitig ein sicherheitsbezogenes Eingangssignal eines Lichtgitters (16b) und zwei sicherheitsbezogene Kommunikationselemente (KE) ein, so dass das erste Bearbeitungselement (BE) ausgangsseitig zwei sicherheitsbezogene Ausgangssignale (S-IO) an das nächste zweite Bearbeitungselement (BE) verschickt. Ein weiteres sicherheitsbezogenes Eingangssignal eines weiteren Lichtgitters (16b) und ein sicherheitsbezogenes Eingangssignal einer Kamera (16a) sind mit einer UND-Logikverknüpfung (106) verbunden, aus der ein sicherheitsbezogenes Ausgangssignal (S-IO) an das zweite Bearbeitungselement (BE) verschickt wird. Das zweite Bearbeitungselement (BE) erzeugt und kommuniziert ein sicherheitsbezogenes Ausgangssignal (S-IO), insbesondere Steuersignal, an den Aktor in Form einer Stanze (17b).

Da die Verknüpfung nur sicherheitsbezogene Elemente aufweist, wird erfindungsgemäß im Display (101) ein komplett gelbes sicherheitsbezogenes Blockschaltbild (B) der Sicherheitssteuerung (10) angezeigt.

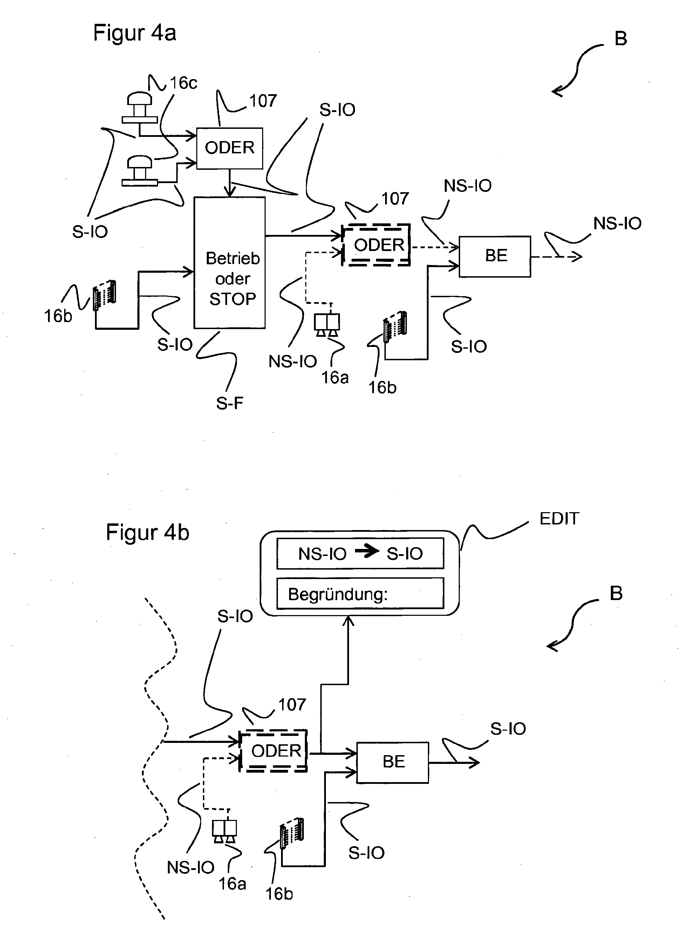

Bei einer Verwendung eines nicht-sicherheitsbezogenen Kommunikationselements (KE) bei der Konfiguration der Sicherheitssteuerung (10) wird erfindungsgemäß, wie in Figur 4a gezeigt, eine Beeinträchtigung der Sicherheitsfunktion der Sicherheitssteuerung (10) identifiziert.

Hierbei sind zwei sicherheitsbezogene Eingangssignale (S-IO) von jeweils zwei Not-Aus-Schaltern (16c) mit einer beispielhaften ODER-Logikverknüpfung (107) verbunden, die aus den beiden gelben sicherheitsbezogenen Eingangssignalen (S-IO) der beiden Not-Aus-Schalter (16c) ein gelbes sicherheitsbezogenes Ausgangs-signal (S-IO) erzeugt und an die folgende gelbe sicherheitsbezogene Funktion (S-F) sendet. Die gelbe sicherheitsbezogene Funktion (S-F) erhält eingangsseitig ein weiteres gelbes sicherheitsbezogenes Eingangssignal (S-IO) eines sicherheitsbezogenen Lichtgitters (16b). Aus den Signalen erzeugt die gelbe sicherheitsbezogene Funktion (S-F) ein gelbes sicherheitsbezogenes Ausgangssignal (S-IO), das als gelbes sicherheitsbezogenes Eingangssignal (S-IO) einer nachfolgenden gelben sicherheitsbezogenen ODER-Logikverknüpfung (107) dient. Die gelbe sicherheitsbezogene ODER-Logikverknüpfung (107) erhält zusätzlich ein graues nicht-sicherheitsbezogenes Eingangssignal (NS-IO) einer nicht-sicherheitsbezogenen Kamera (16a), so dass erfindungsgemäß das Ausgangssignal der gelben sicherheitsbezogenen ODER-Logikverknüpfung (107) als ein graues nicht-sicherheitsbezogen gekennzeichnetes Signal (NS-IO) gilt und dementsprechend als ein solches an das nachfolgende gelbe sicherheitsbezogene Bearbeitungselement (BE) kommuniziert wird.

Ab diesen Zeitpunkt ist die sicherheitsbezogene ODER-Logikverknüpfung als nicht-sicherheitsbezogen gekennzeichnet und die nachfolgende Verknüpfungskette als nicht mehr sicherheitsbezogen dargestellt.

Das nachfolgende gelbe sicherheitsbezogene Bearbeitungselement (BE) erhält ein zusätzliches gelbes sicherheitsbezogenes Eingangssignal (S-IO) von einem weiteren sicherheitsbezogenen Lichtgitter (16b) und das als graues nicht-sicherheitsbezogen gekennzeichnete Signal (NS-IO) von der ODER-Logikverknüpfung (107). Als Ausgangssignal des Bearbeitungselements (BE) wird ebenfalls ein als graues nicht-sicherheitsbezogen gekennzeichnetes Signal (NS-IO) erzeugt, so dass die gesamte Sicherheitssteuerung (10) als nicht-sicherheitsbezogen gilt.

Die derart erzeugte Sicherheitssteuerung (10), die im Display (101) ab der ODER-Logikverknüpfung (107) als nicht-sicherheitsbezogen gekennzeichnet ist, kann vorteilhafterweise gemäß der Erfindung überprüft und gegebenenfalls in sicherheitsbezogen umgewandelt werden.

Eine erfindungsgemäße Überprüfung und Umwandlung ist in der Figur 4b gezeigt.

Das dargestellte Blockschaltbild entspricht einem Ausschnitt der Figur 4a, wobei nach der Diagnose die ODER-Logikverknüpfung (107) als das Element der Verknüpfungskette identifiziert und gekennzeichnet ist, an dem zum ersten Mal ein graues nicht-sicherheitsbezogenes Eingangssignal (NS-IO) mit einem gelben sicherheitsbezogenen Eingangssignal (S-IO) verknüpft wurde, so dass die Sicherheitsfunktion der gesamten Sicherheitssteuerung (10) beeinträchtigt und nicht mehr als sicherheitsbezogen gekennzeichnet wurde.

Die erfindungsgemäße Vorrichtung (100) ermöglicht einem Bediener das als graues nicht-sicherheitsbezogen gekennzeichnete Ausgangssignal (NS-IO) der ODER-Logikverknüpfung (107) zu editieren und anhand des Bearbeitungsfensters (EDIT) das Ausgangssignal in ein sicherheitsbezogenes Ausgangssignal (S-IO) umzuwandeln, wenn das Ausgangssignal als sicherheitsbezogen gelten darf, z.B. im Falle der Verwendung einer sicherheitsbezogenen Kamera (16a) anstatt wie vorher angenommen eine nicht-sicherheitsbezogene Kamera (16a), so dass beide Eingangssignale der ODER-Logikverknüpfung (107) tatsächlich sicherheitsbezogene Signale (S-IO) sind. Hierbei muss diese Begründung für die sicherheitsrelevante Änderung des Ausgangssignals (NS-IO -> S-IO) eingegeben und bestätigt werden.

Mit der Umwandlung erhält das folgende Bearbeitungselement (BE) anstatt jeweils eines sicherheitsbezogenen und nicht-sicherheitsbezogenen Eingangssignals (S-IO, NS-IO) zwei sicherheitsbezogene Eingangssignale (S-IO), so dass das Ausgangssignal der gesamten Verknüpfungskette und damit der konfigurierten Sicherheitssteuerung (10) wieder ein sicherheitsbezogenes Ausgangssignal (S-IO) darstellt.

Nach Überprüfung der Verknüpfungskette kann ein sicherheitsbezogenes Programm erzeugt und in der Sicherheitssteuerung (10) implementiert werden, so dass die Sicherheitssteuerung (10) dem Bearbeitungszentrum (1) zur Verfügung gestellt werden kann.

Erfindungsgemäß kann eine mögliche sicherheitsrelevante Fehlkonfiguration und Programmierung der Sicherheitssteuerung (10) auf einfache Art und Weise erkannt und behoben werden.

### Bezugszeichenliste

| | | | |
|---|---|---|---|
| 1 | Bearbeitungszentrum | B | Blockschaltbild |
| 10 | Sicherheitssteuerung | BE | Bearbeitungselement |
| 11 | Steuerungsmodul | KE | Kommunikationselement |
| 12 | Anschlussmodul | EDIT | Bearbeitungsfenster |
| 13 | Eingangsanschlüsse | | |
| 14 | Ausgangsanschlüsse | | |
| 15 | Kommunikationsverbindung | | |
| 16a | Kamera | | |
| 16b | Lichtgitter | | |
| 16c | Not-Aus-Schalter | | |
| 17a | Roboter | | |
| 17b | Stanze | | |
| 100 | Vorrichtung zum Konfigurieren und/oder Programmieren | | |
| 101 | Display | | |
| 102 | Speichereinheit | | |
| 103 | Rechnereinheit | | |
| 106 | UND-Logikverknüpfung | | |
| 107 | ODER-Logikverknüpfung | | |
| S-IO | Sicherheitsbezogene Eingangs- und Ausgangssignale | | |
| NS-IO | Nicht-sicherheitsbezogene Eingangs- und Ausgangssignale | | |
| S-F | Sicherheitsbezogene Funktion | | |

## Patentansprüche

1. Vorrichtung (100) zum Konfigurieren und/oder Programmieren einer Sicherheitssteuerung (10) mit
einem Display (101) zum Anzeigen eines Programmteils der Sicherheitssteuerung (10) in Form eines Blockschaltbilds (B), wobei einzelne Blöcke Programmelemente darstellen;
einer Speichereinheit (102) mit zumindest einem Bearbeitungselement (BE), insbesondere einer Logikverknüpfung und/oder einer Funktion, und mit Kommunikationselementen (KE), die insbesondere als Eingangs- und Ausgangssignale ausgebildet sind; und
einer Rechnereinheit (103) zum Auswählen der Bearbeitungs- und Kommunikationselemente (BE, KE) in der Speichereinheit (102) und zum Erzeugen einer Verknüpfung der ausgewählten Bearbeitungs- und Kommunikationselemente (BE, KE) in dem im Display (101) angezeigten Blockschaltbild (B), wobei die Rechnereinheit (103) ausgelegt ist, ein die Sicherheitssteuerung (10) steuerndes Programm aus dem Blockschaltbild (B) zu erzeugen, **dadurch gekennzeichnet, dass** die Kommunikationselemente (KE) sowohl sicherheitsbezogen als auch nicht-sicherheitsbezogen gekennzeichnet sind, und
dass die Rechnereinheit (103) ferner ausgelegt ist, dass bei einer Verknüpfung eines sicherheitsbezogen gekennzeichneten Kommunikationselements (KE) mit einem nicht-sicherheitsbezogen gekennzeichneten Kommunikationselement (KE), die an einer Eingangsseite des Bearbeitungselements (BE) anliegen, stets ein als nicht-sicherheitsbezogen gekennzeichnetes Kommunikationselement (KE) sich auf einer Ausgangsseite des Bearbeitungselements (BE) ergibt.

2. Vorrichtung nach Anspruch 1, **dadurch gekennzeichnet, dass** das Bearbeitungselement (BE) aus sicherheitsbezogene und nicht- sicherheitsbezogene Funktionen (S-F) und/oder einer Logikverknüpfung, insbesondere UND- oder ODER-Logikverknüpfung (106, 107), besteht.

3. Vorrichtung nach Anspruch 1 oder 2, **dadurch gekennzeichnet, dass** das Kommunikationselement (KE) sicherheitsbezogene und nicht-sicherheitsbezogene Eingangs- und Ausgangssignale (S-IO, NS-IO) oder sicherheitsbezogene und nicht-sicherheitsbezogene Daten, insbesondere Datenprotokolle, enthält.

4. Vorrichtung nach einem der Ansprüche 1 bis 3, **dadurch gekennzeichnet, dass** die Rechnereinheit (103) ausgelegt ist, das als nicht-sicherheitsbezogen gekennzeichnete Kommunikationselement (KE) editierbar zu machen und eine Änderung des als nicht-sicherheitsbezogen gekennzeichneten Kommunikationselements (KE) in ein sicherheitsbezogen gekennzeichnetes Kommunikationselement (KE) zuzulassen.

5. Vorrichtung nach Anspruch 4, **dadurch gekennzeichnet, dass** die Rechnereinheit (103) ausgelegt ist, die Änderung des als nicht-sicherheitsbezogen gekennzeichneten Kommunikationselements (KE) in ein sicherheitsbezogen gekennzeichnetes Kommunikationselement (KE) nur bei einer Bestätigung der Änderung mit Angabe von Gründen zuzulassen.

6. Vorrichtung nach einem der Ansprüche 1 bis 5, **dadurch gekennzeichnet, dass** die Rechnereinheit (103) ein Diagnosemittel aufweist, das eine Position des Bearbeitungselements (BE) angibt, an dem erstmals eingangsseitig ein sicherheitsbezogen gekennzeichnetes Kommunikationselement (KE) und ein nicht-sicherheitsbezogen gekennzeichnetes Kommunikationselement (KE) anliegen, so dass bei einer Verknüpfung von mehreren Bearbeitungs- und Kommunikationselementen (BE, KE) das als nicht-sicherheitsbezogen gekennzeichnete Kommunikationselement (KE) sich als Ergebnis ergibt.

7. Verfahren zum Konfigurieren und/oder Programmieren einer Sicherheitssteuerung (10) mit den Schritten:
- Bereitstellen von zumindest einem Bearbeitungselement (BE), insbesondere einer Logikverknüpfung und/oder einer Funktion, und Kommunikationselementen (KE) in einer Speichereinheit (102);
- Auswählen der Bearbeitungs- und Kommunikationselemente (BE, KE) aus der Speichereinheit (102);
- Erzeugen einer Verknüpfung der ausgewählten Bearbeitungs- und
Kommunikationselemente (BE, KE) mittels vorgegebenen Verknüpfungsregeln;
**dadurch gekennzeichnet,**
**dass** die Kommunikationselemente (KE) als sicherheitsbezogen und nicht-sicherheitsbezogen gekennzeichnet werden, und
**dass** ein Ergebnis der Verknüpfung auf einer Ausgangsseite des Bearbeitungselements (BE) stets als ein nicht-sicherheitsbezogen gekennzeichnetes Kommunikationselement (KE) gesetzt wird, wenn bei der Verknüpfung ein sicherheitsbezogen gekennzeichnetes Kommunikationselement (KE) und ein nicht-sicherheitsbezogen gekennzeichnetes Kommunikationselement (KE) auf einer Eingangsseite des Bearbeitungselements (BE) ausgewählt werden.

8. Verfahren nach Anspruch 7, **dadurch gekennzeichnet, dass** sicherheitsbezogene und nicht- sicherheitsbezogene Funktionen (S-F) und/oder eine Logikverknüpfung, insbesondere UND- oder ODER-Logikverknüpfung (106, 107), als Bearbeitungselement (BE) zur Auswahl bereitgestellt werden.

9. Verfahren nach Anspruch 7 oder 8, **dadurch gekennzeichnet, dass** sicherheitsbezogene und nicht-sicherheitsbezogene Eingangs- und Ausgangssignale (S-IO, NS-IO) oder sicherheitsbezogene und nicht-sicherheitsbezogene Daten, insbesondere Datenprotokolle, als Kommunikationselemente (KE) zur Auswahl bereit-gestellt werden.

10. Verfahren nach einem der Ansprüche 7 bis 9, **gekennzeichnet durch** die Schritte
- Editieren des nicht-sicherheitsbezogen gekennzeichneten Kommunikationselements (KE), das sich als Ergebnis der Verknüpfung zwischen einem sicherheitsbezogen gekennzeichneten Kommunikationselement (KE) und einem nicht-sicherheitsbezogen gekennzeichneten Kommunikationselement (KE) ergeben hat, und
- Ändern des als nicht-sicherheitsbezogen gekennzeichneten Kommunikationselements (KE) in ein sicherheitsbezogen gekennzeichnetes Kommunikationselement (KE).

11. Verfahren nach Anspruch 10, **gekennzeichnet durch** die Schritte
- Bestätigen der Änderung des als nicht-sicherheitsbezogen gekennzeichneten Kommunikationselements (KE) in ein sicherheitsbezogen gekennzeichnetes Kommunikationselement (KE) mit Angabe eines Grundes für die Änderung, und
- Durchführen und Dokumentieren der Änderung sowie der Änderungsbegründung.

12. Verfahren nach einem der Ansprüche 7 bis 11, **dadurch gekennzeichnet, dass** bei einer Reihe von mehreren Verknüpfungen, bei der das als nicht-sicherheitsbezogen gekennzeichnete Kommunikationselement (KE) sich ergeben hat, die Position des Bearbeitungselements (BE) angezeigt wird, bei dem erstmals eingangsseitig ein sicherheitsbezogen gekennzeichnetes Kommunikationselement (KE) mit einem nicht-sicherheitsbezogen gekennzeichneten Kommunikationselement (KE) verknüpft sind.

## Claims

1. An apparatus (100) for configuring and/or programming a safety controller (10), comprising
a display (101) for displaying a program part of the safety controller (10) in the form of a block diagram (B), wherein individual blocks represent program elements;
a memory unit (102) with at least one processing element (BE), in particular a logical operation and/or a function, and communication elements (KE) which are designed in particular as input and output signals; and
a processing unit (103) for selecting the processing and communication elements (BE, KE) in the memory unit (102) and for generating a conjunction of the selected processing and communication elements (BE, KE) in the block diagram (B) being displayed in the display (101), wherein the processing unit (103) is adapted to generate a program controlling the safety controller (10) from the block diagram (B),
**characterized in that** the communication elements (KE) are marked both safety-related and non-safety-related, and
that the processing unit (103) is further arranged such that for a combination of a safety-related marked communication element (KE) with a non-safety-related marked communication element (KE), the combination abuts on an input side of the processing element (BE), always a non-safety-related marked communication element (KE) is produced on an output side of the processing element (BE).

2. An apparatus according to claim 1, **characterized in that** the processing element (BE) is consisted of safety-related and non-safety-related functions (SF) and/or a logical operation, in particular an AND or OR logical operation (106, 107).

3. An apparatus according to claim 1 or 2, **characterized in that** the communication element (KE) contains safety-related and non-safety-related input and output signals (S-IO, NS-IO) or safety-related and non-safety-related data, especially data protocols.

4. An apparatus according to one of the claims 1 to 3, **characterized in that** the processing unit (103) is adapted to make editable the as non-safety-related marked communication element (KE) and to permit a change of the non-safety-related marked communication element (KE) to a safety-related marked communication element (KE).

5. An apparatus according to claim 4, **characterized in that** the processing unit (103) is adapted to permit a change of the non-safety-related marked communication element (KE) to a safety-related marked communication element (KE) only by a confirmation of the change with specification of reasons.

6. An apparatus according to one of the claims 1 to 5, **characterized in that** the processing unit (103) comprises a diagnostic means indicating a position of the processing element (BE) at which a safety-related marked communication element (KE) and a non-safety-related marked communication element (KE) abut for a first time on the input side, so that by a combination of a plurality of processing and communication elements (BE, KE) the non-safety-related marked communication element (KE) is obtained as a result.

7. A method for configuring and/or programming a safety controller (10), comprising the steps of:
- providing at least one processing element (BE), in particular of a logical operation and/or a function, and communication elements (KE) in a memory unit (102);
- selecting said processing and communication elements (BE, KE) from the memory unit (102);
- generating a conjunction of the selected processing and communication elements (BE, KE) using predefined conjunction rules;
**characterized in that**
the communication elements (KE) are marked as safety-related and non-safety-related, and
that a result of the conjunction on an output side of the processing element (BE) is always set as a non-safety-related marked communication element (KE) when by the conjunction a safety-related marked communication element (KE) and a non-safety-related marked communication element (KE) are selected on an input side of the processing element (BE).

8. A method according to claim 7, **characterized in that** safety-related and non-safety related functions (SF) and/or a logical operation, in particular an AND or OR logical operation (106, 107), are provided to be selected as the processing element (BE).

9. A method according to claim 7 or 8, **characterized in that** safety-related and non-safety-related input and output signals (S-IO NS-IO) or safety-related and non-safety-related data, in particular data protocols, are provided to be selected as communication elements (KE).

10. A method according to one of claims 7 to 9, **characterized by** the steps of
- editing of non-safety-related communication marked elements (KE), which is a result of the conjunction between a safety-related marked communications element (KE) and a non-safety-related marked communication element (KE) and
- changing the non-safety-related marked communication element (KE) in a safety-related marked communication element (KE).

11. A method according to claim 10, **characterized by** the steps of
- confirming the change of the non-safety-related marked communication element (KE) to a safety-related marked communication element (KE) with specifying a reason for the change, and
- performing and documenting the change and the reason for the change.

12. A method according to one of the claims 7 to 11, **characterized in that** by a series of a plurality of conjunctions, at which the non-safety-related marked communication element (KE) has been resulted, the position of the processing element (BE) is displayed at which a safety-related marked communication element (KE) and a non-safety-related marked communication element (KE) have been combined for a first time.

## Revendications

1. Dispositif (100) pour configurer et/ou programmer une commande de sécurité (10) comprenant
un affichage (101) pour afficher une partie de programme de la commande de sécurité (10) sous la forme d'un schéma-bloc (B) dans lequel des blocs individuels représentent des éléments du programme ; une unité à mémoire (102) avec au moins un élément de traitement (BE), en particulier un chaînage logique et/ou une fonction, et avec des éléments de communication (KE), qui sont réalisés en particulier sous forme de signaux d'entrée et de signaux de sortie ; et
une unité de calcul (103) pour sélectionner les éléments de traitement et les éléments de communication (BE, KE) dans l'unité à mémoire (102) et pour engendrer un chaînage des éléments de traitement et des éléments de communication (BE, KE) sélectionnés dans le schéma-bloque (B) montré dans l'affichage (101), dans lequel l'unité de calcul (103) est conçu pour engendrer à partir du schéma-bloc (B) un programme qui commande la commande de sécurité (10),
**caractérisé en ce que**
les éléments de communication (KE) sont caractérisés comme éléments à vocation de sécurité et comme éléments sans vocation de sécurité, et **en ce que** l'unité de calcul (103) est en outre conçue de telle manière que lors d'un chaînage d'un élément de communication (KE) caractérisé comme élément à vocation de sécurité avec un élément de communication (KE) caractérisé comme élément sans vocation de sécurité, qui sont appliqués sur un côté d'entrée de l'élément de traitement (BE), il en résulte toujours sur un côté de sortie de l'élément de traitement (BE) un élément de communication (KE) caractérisé comme élément sans vocation de sécurité.

2. Dispositif selon la revendication 1, **caractérisé en ce que** l'élément de traitement (BE) est constitué de fonctions à vocation de sécurité et de fonctions sans vocation de sécurité (S-F) et/ou d'un chaînage logique, en particulier d'un chaînage logique (106, 107) du type ET ou du type OU.

3. Dispositif selon la revendication 1 ou 2, **caractérisé en ce que** l'élément de communication (KE) contient des signaux d'entrée et des signaux de sortie (S-IO, NS-IO) à vocation de sécurité et sans vocation de sécurité, ou des données, en particulier des protocoles de données, à vocation de sécurité et sans vocation de sécurité.

4. Dispositif selon l'une des revendications 1 à 3, **caractérisé en ce que** l'unité de calcul (103) est conçue pour rendre accessible l'élément de communication (KE) caractérisé comme élément sans vocation de sécurité et pour admettre une modification de l'élément de communication (KE) caractérisé comme élément sans vocation de sécurité en un élément de communication (KE) caractérisé comme élément à vocation de sécurité.

5. Dispositif selon la revendication 4, **caractérisé en ce que** l'unité de calcul (103) est conçue pour admettre la modification de l'élément de communication (KE) caractérisé comme élément sans vocation de sécurité en un élément de communication (KE) caractérisé comme élément à vocation de sécurité uniquement lors d'une confirmation de la modification avec indication des raisons.

6. Dispositif selon l'une des revendications 1 à 5, **caractérisé en ce que** l'unité de calcul (103) comprend des moyens de diagnostic, qui indiquent une position de l'élément de traitement (BE) auquel sont appliqués pour la première fois du côté entrée un élément de communication (KE) caractérisé comme élément à vocation de sécurité et un élément de communication (KE) caractérisé comme élément sans vocation de sécurité, de sorte que lors d'un chaînage de plusieurs éléments de traitement et de communication (BE, KE), il en résulte que l'élément de communication (KE) est caractérisé comme élément sans vocation de sécurité.

7. Procédé pour configurer et/ou programmer une commande de sécurité (10) comprenant les étapes consistant à :
- mettre à disposition au moins un élément de traitement (BE), en particulier un chaînage logique et/ou une fonction, et des éléments de communication (KE) dans une unité à mémoire (102) ;
- sélectionner les éléments de traitement et de communication (BE, KE) hors de l'unité à mémoire (102) ;
- engendrer un chaînage des éléments de traitement et de communication (BE, KE) sélectionnés au moyen de règles de chaînage prédéterminé ;
**caractérisé en ce que**
les éléments de communication (KE) sont caractérisés comme éléments à vocation de sécurité et comme éléments sans vocation de sécurité, et **en ce qu'**un résultat du chaînage sur un côté de sortie de l'élément de traitement (BE) est toujours imposé comme élément de communication (KE) caractérisé comme élément sans vocation de sécurité lorsqu'on sélectionne lors du chaînage un élément de communication (KE) caractérisé comme élément à vocation de sécurité et un élément de communication (KE) caractérisé comme élément sans vocation de sécurité sur un côté entrée de l'élément de traitement (BE).

8. Procédé selon la revendication 7, **caractérisé en ce que** l'on met à disposition pour la sélection des fonctions à vocation de sécurité et des fonctions sans vocation de sécurité (S-F) et/ou un chaînage logique, en particulier un chaînage logique (106, 107) du type ET ou du type OU, à titre d'élément de traitement (BE).

9. Procédé selon la revendication 7 ou 8, **caractérisé en ce que** les signaux d'entrée et les signaux de sortie (S-IO, NS-IO) à vocation de sécurité et sans vocation de sécurité ou bien des données, en particulier des protocoles de données, à vocation de sécurité et sans vocation de sécurité sont mis à disposition pour la sélection à titre d'élément de communication (KE).

10. Procédé selon l'une des revendications 7 à 9, **caractérisé par** les étapes consistant à :
- accéder à l'élément de communication (KE) caractérisé comme élément sans vocation de sécurité, qui a résulté du chaînage entre un élément de communication (KE) caractérisé comme élément à vocation de sécurité et un élément de communication (KE) caractérisé comme élément sans vocation de sécurité, et
- modifier l'élément de communication (KE) caractérisé comme élément sans vocation de sécurité en un élément de communication (KE) caractérisé comme élément à vocation de sécurité.

11. Procédé selon la revendication 10, **caractérisé par** les étapes consistant à
- confirmer la modification de l'élément de communication (KE) caractérisé comme élément sans vocation de sécurité en un élément de communication (KE) caractérisé comme élément à vocation de sécurité avec indication d'une raison pour la modification, et
- exécution et documentation de la modification ainsi que de la raison de modification.

12. Procédé selon l'une des revendications 7 à 11, **caractérisé en ce que** pour une série de plusieurs chaînages, dans laquelle il en a résulté un élément de communication (KE) caractérisé comme élément sans vocation de sécurité, on affiche la position de l'élément de traitement (BE) pour lequel pour la première fois du côté entrée un élément de communication (KE) caractérisé comme élément à vocation de sécurité est chaîné avec un élément de communication (KE) caractérisé comme élément sans vocation de sécurité.
